# EUROPEAN PATENT APPLICATION

(11) **EP 4 564 229 A1**
(43) Date of publication of application: **04.06.2025**
(21) Application number: 23212766.2
(22) Date of filing: 28.11.2023
(51) Int. Cl.: G06N 3/08

(54) **METHOD AND SYSTEM FOR AUTOMATICALLY GENERATING LABELED TRAINING DATA FOR SUPERVISED MACHINE LEARNING MODELS FOR INDUSTRIAL EQUIPMENT MATCHING**

(71) Applicant: Siemens Aktiengesellschaft, 80333 München (DE)
(72) Inventor: Buckley, Mark, 81829 München (DE); Hasan, Rakebul, 84036 Landshut (DE); Ringsquandl, Martin, 83064 Raubling (DE)
(74) Representative: Siemens Patent Attorneys

(57) **Abstract**

In an iterative loop a machine learning model (MLM) is trained (TR) with labeled data (LD), thereby forming a trained machine learning model (T-MLM), and then deployed (DP). The trained machine learning model (T-MLM) then receives as input at least pairs of equipment identifiers contained in unlabeled data (UD) and calculates (CL) predictions (P), wherein the predictions (P) contain at least one match prediction (P-M) for a pair of equipment identifiers indicating that the equipment identifiers refer to a same industrial equipment, and wherein the predictions (P) contain in particular at least one different prediction (P-D) for a pair of equipment identifiers indicating that the equipment identifiers refer to different industrial equipment. An inaccuracy detector (ID) using an inaccuracy heuristics (IH) containing in particular probability thresholds for correct predictions, detects (DT) accurate and inaccurate predictions among the predictions (P), and collects the accurate predictions as automatically labeled data (ALD). These are used to boost (BT) existing labeled data (ELD), which is used in a next iteration as the labeled data (LD) for the training operation (TR). In contrast to rule-based approaches, where domain experts manually create a large number of rules, the inaccuracy heuristics (IH) can be primarily derived from data driven analyses which do not require a big investment of time from domain experts.

## Description

The problem of equipment matching is common in industrial use cases such as plants, buildings, and other complex industrial systems. In such use cases, information about individual pieces of equipment can be scattered across heterogeneous data sources. These data sources may use different naming schemas, such as KKS (German acronym for "Kraftwerk-Kennzeichnungssystem") and MLFB (German acronym for "Maschinenlesbare Fabrikatebezeichnung"), to refer to the same physical equipment, and hence can lead to inconsistencies across different data sources and systems.

Existing solutions for equipment matching use rule-based approaches, where domain experts must manually curate a large number of rules which cover the possible matching conditions. However, this process is expensive, error-prone, and it is often not possible to have a broad coverage of the possible matches with rule-based approaches.

Using machine learning approaches eliminates the need for manual efforts required for curating rules. Furthermore, a well-tuned machine learning model potentially generalizes over a broad range of possible matches. In addition, a machine learning model is less error-prone with respect to human errors resulting from manually curated specific conditions for specific matching criteria.

The equipment matching problem falls under the broad area of entity matching in machine learning, as disclosed in Nils Barlaug and Jon Atle Gulla. 2021. Neural Networks for Entity Matching: A Survey. ACM Trans. Knowl. Discov. Data 15, 3, Article 52 (June 2021), 37 pages. Unsupervised machine learning approaches for entity matching do not require labeled matched examples for training. However, unsupervised approaches for industrial domains are still in their infancy. Unsupervised approaches lack the possibility of capturing the use case specific characteristics of possible matches.

In contrast, supervised machine learning approaches for entity matching can capture the use case specific characteristics effectively. This leads to better performances and broader generalizations over possible matches. However, supervised machine learning approaches require a large number of labeled matched examples for training. Manually annotating such examples is extremely expensive and is often not practical.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for automatically generating labeled training data for supervised machine learning models for industrial equipment matching, the following operations are performed by components, wherein the components are hardware components and/or software components executed by one or more processors:
- training, by a first component, a machine learning model with labeled data, thereby forming a trained machine learning model,
- calculating, by the trained machine learning model receiving as input at least pairs of equipment identifiers contained in unlabeled data, predictions, wherein the predictions contain at least one match prediction for a pair of equipment identifiers indicating that the equipment identifiers refer to a same industrial equipment, and wherein the predictions contain in particular at least one different prediction for a pair of equipment identifiers indicating that the equipment identifiers refer to different industrial equipment,
- detecting, by an inaccuracy detector using an inaccuracy heuristics containing in particular probability thresholds for correct predictions, accurate and inaccurate predictions among the predictions, and collecting the accurate predictions as automatically labeled data.

The data labeling system for automatically generating labeled training data for supervised machine learning models for industrial equipment matching comprises the following components, wherein the components are hardware components and/or software components executed by one or more processors:
- a first component, configured for training a machine learning model with labeled data, thereby forming a trained machine learning model, wherein the trained machine learning model is configured for receiving as input at least pairs of equipment identifiers contained in unlabeled data and for calculating predictions, wherein the predictions contain at least one match prediction for a pair of equipment identifiers indicating that the equipment identifiers refer to a same industrial equipment, and wherein the predictions contain in particular at least one different prediction for a pair of equipment identifiers indicating that the equipment identifiers refer to different industrial equipment, and
- an inaccuracy detector, configured for using an inaccuracy heuristics containing in particular probability thresholds for correct predictions and for detecting accurate and inaccurate predictions among the predictions, and collecting the accurate predictions as automatically labeled data.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices, or any other communication devices that can process data with computer support, processors, and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and system, or at least some of their embodiments, have the advantage that in contrast to rule-based approaches, where domain experts manually create a large number of rules, the inaccuracy heuristics can be primarily derived from data driven analyses which do not require a big investment of time from domain experts.

In an embodiment of the method and system, the training operation, the calculating operation, and the detecting operation are performed in a first iteration and then in subsequent iterations. The machine learning model trained in each iteration is the same model or a different model, and wherein the machine learning model trained in the subsequent iterations is a supervised model, in particular a neural network for entity matching that has been adapted for industrial equipment matching.

In another embodiment of the method and system, the machine learning model trained in the first iteration is an unsupervised model, in particular an equipment identifier character frequency model or an autoencoder model.

In another embodiment of the method and system, the machine learning model in the first iteration is a supervised model, in particular a few-shot entity matching supervised model that has been adapted for industrial equipment matching and that is trained with initial hand-picked labeled data.

An embodiment of the method and system comprises the final operation of boosting, at the end of each iteration, existing labeled data by adding the automatically labeled data to the existing labeled data. The existing labeled data is then used as the labeled data for the training operation in the next iteration.

The computer program product comprises instructions which, when the program is executed by a computer, cause the computer to carry out the method.

The provisioning device for the computer program product stores and/or provides the computer program product.

The foregoing and other aspects of the present invention are best understood from the following detailed description when read in connection with the accompanying drawings. For the purpose of illustrating the invention, the drawings show embodiments that are presently preferred. However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment,
- Fig. 3: shows an auto-labeling workflow,
- Fig. 4: shows a flowchart of a possible exemplary embodiment.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

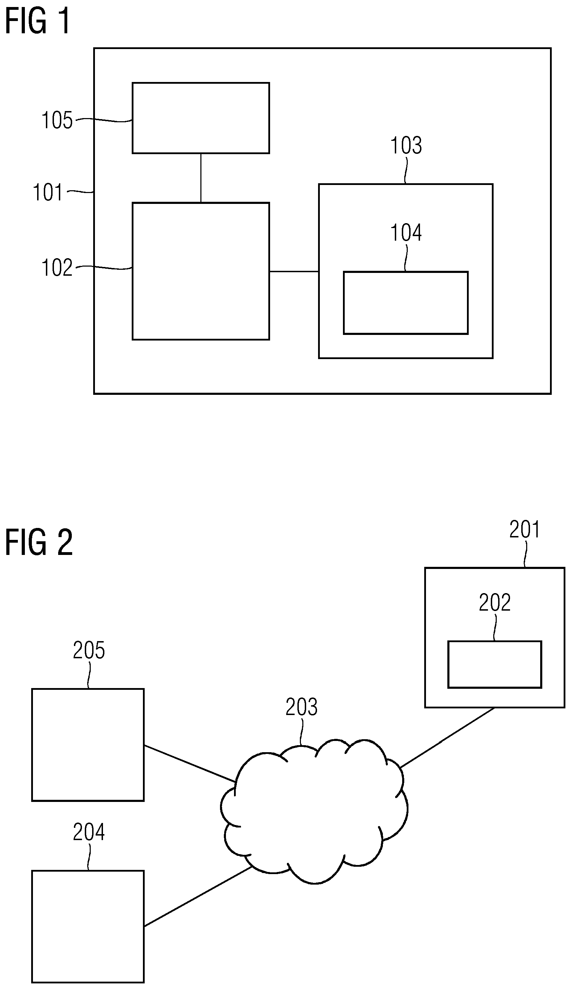

Fig. 1 shows one sample structure for computer-implementation of the invention which comprises:
- (101): computer system
- (102): processor
- (103): memory
- (104): computer program (product)
- (105): user interface

In this embodiment of the invention the computer program 104 comprises program instructions for carrying out the invention. The computer program 104 is stored in the memory 103 which renders, among others, the memory 103 and/or its related computer system 101 a provisioning device for the computer program 104. The computer system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:
- (201): provisioning device
- (202): computer program (product)
- (203): computer network/Internet
- (204): computer system
- (205): mobile device/smartphone

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

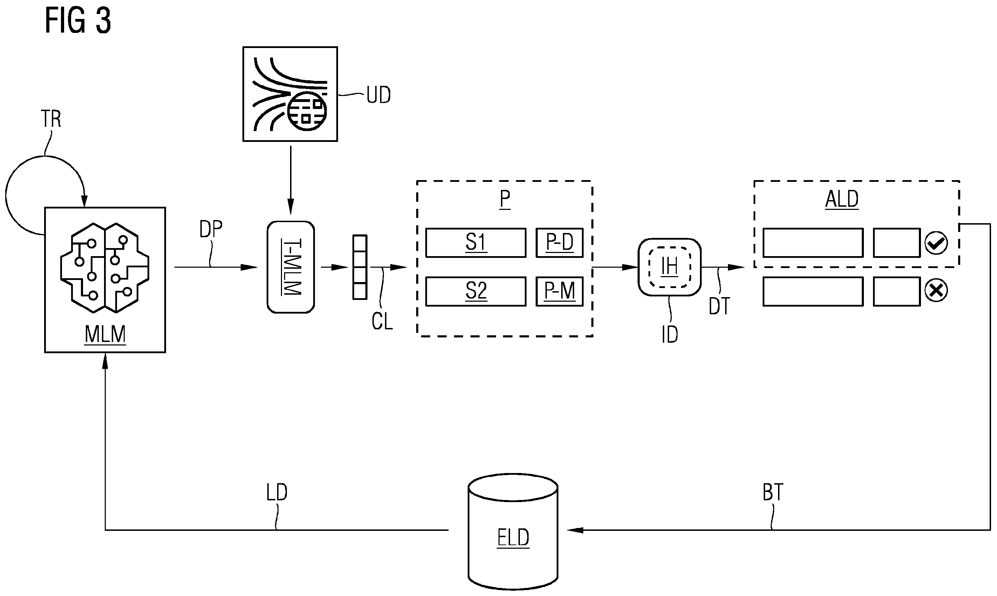

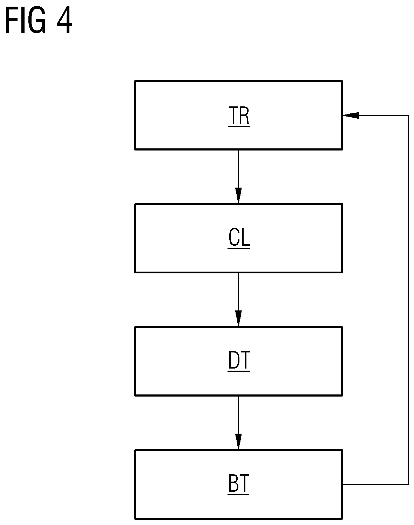

Preferably, the embodiments shown in Figs. 3 and 4 can be implemented with a structure as shown in Fig. 1 or Fig. 2.

The embodiments described in the following provide solutions for automatically generating labeled training data for supervised machine learning models for industrial equipment matching.

Lee, Dong-Hyun. (2013). Pseudo-Label : The Simple and Efficient Semi-Supervised Learning Method for Deep Neural Networks. ICML 2013 Workshop : Challenges in Representation Learning (WREPL) discloses a pseudo-labeling approach. The entire contents of that document are incorporated herein by reference.

The auto-labeling approach of the embodiments described in the following is based on the pseudo-labeling approach but has been adapted for the case of equipment matching in industrial use cases.

According to a current embodiment, Fig. 3 shows an auto-labeling workflow that addresses the problem of automatically generating labeled data for industrial equipment matching.

The workflow of the current embodiment contains a training operation TR, a calculating operation CL, a detecting operation DT, and a boosting operation BT.

The current embodiment uses three inputs:
First, unlabeled data UD, containing at least two tables taken from one or more data sources. The tables contain industrial equipment data which should be matched. Rows in the tables represent industrial equipment. Furthermore, each table contains at least one column for an equipment identifier which conforms to a schema such as KKS or MLFB that allows expressing an equipment description.
Second, a machine learning model MLM receiving as input at least a pair of equipment identifiers. The machine learning model MLM is trained during the training operation TR. The training operation TR can be performed in a first iteration and then in subsequent iterations. The same machine learning model MLM or different machine learning models MLM can be trained in each iteration. Input features of each machine learning model MLM must at least represent character compositions of the equipment identifiers that the machine learning model MLM receives as input. Additional features could also be derived from other equipment attributes in different modalities such as texts or images. The machine learning model MLM trained in the first iteration can be an unsupervised model or a supervised model, which may or may not predict "matched" and "different" equipment pairs with high accuracy. However, the machine learning model MLM trained in the subsequent iterations needs to have a supervised model architecture.
Third, a small set of initial hand-picked labeled data, for example sample pairs of equipment identifiers that are labeled as matching or different. This is not necessary when the machine learning model MLM in the first iteration is an unsupervised model.

When the machine learning model MLM trained in the first iteration is an unsupervised model, it can be a simple equipment identifier character frequency model or a more sophisticated autoencoder model.

When the machine learning models MLM trained in the first iteration is a supervised model, it can be a few-shot entity matching supervised model as disclosed in Nils Barlaug and Jon Atle Gulla. 2021. Neural Networks for Entity Matching: A Survey. ACM Trans. Knowl. Discov. Data 15, 3, Article 52 (June 2021), 37 pages. The entire contents of that document are incorporated herein by reference. The few-shot entity matching supervised model is adapted for industrial equipment matching, where the first iteration model would be trained on the initial hand-picked labeled data.

Regarding the subsequent iterations, the machine learning model MLM can be any entity matching supervised model as disclosed in Nils Barlaug and Jon Atle Gulla. 2021. Neural Networks for Entity Matching: A Survey. ACM Trans. Knowl. Discov. Data 15, 3, Article 52 (June 2021), 37 pages. The entity matching supervised model is adapted for industrial equipment matching.

In the subsequent iterations, the machine learning model MLM is trained further or re-trained using labeled data LD as shown in Fig. 3. For example, the labeled data LD can be a combination of automatically labeled data ALD generated up to the iteration in progress, and the initial hand-picked labeled data (when applicable).

The training operation TR concludes with a trained machine learning model T-MLM.

The calculating operation CL provides predictions P on the unlabeled data UD. For performing the calculating operation CL, the trained machine learning model T-MLM is deployed in a deployment operation DP and thus made available for making the predictions P on the unlabeled data UD, for example input tables.

In the calculating operation CL, unmatched (unlabeled) equipment identifier pairs are passed to the trained machine learning model T-MLM for predictions. For example, drawing from the unlabeled data UD, unmatched (unlabeled) equipment table pairs each containing equipment identifiers can be passed to the trained machine learning model T-MLM. Predicted "matched" equipment identifier pairs are collected as potential positive samples. Predicted "different" equipment identifier pairs may or may not be collected as potential negative samples depending on the negative sampling strategies in the training operation TR. For example, the training operation TR might already include negative sample generation strategies and therefore collecting negative samples might not be necessary.

Fig. 3 shows an example where the predictions P contain a different prediction P-D of a first sample pair S1 of equipment identifiers referring to different industrial equipment, and a match prediction P-M of a second sample pair S2 of equipment identifiers referring to one and the same industrial equipment.

The detecting operation DT uses an inaccuracy heuristics IH, which is a set of heuristics to identify if a prediction P is correct or not. Typical examples of the inaccuracy heuristics IH are (i) probability thresholds for correct predictions, (ii) use case specific equivalent character (feature) mapping automatically derived from character frequency distributions, and/or (iii) other generic rules which do not require too much domain knowledge, and which have a broad coverage.

An inaccuracy detector ID applies the inaccuracy heuristics IH for inaccuracy detection, using a weak supervision framework as disclosed in Ratner, A., Bach, S.H., Ehrenberg, H. et al. Snorkel: rapid training data creation with weak supervision. The VLDB Journal 29, 709-730 (2020). The entire contents of that document are incorporated herein by reference. The goal of the detecting operation DT is to probabilistically determine if a prediction P is correct or incorrect based on the available heuristics.

Those predictions P which are determined as correct are selected as automatically labeled data ALD. In the example shows in Fig. 3, the different prediction P-D for the first sample pair S1 is deemed correct, therefore the first sample pair S1 is included with label "different" in the automatically labeled data ALD. On the other hand, the match prediction P-M for the second sample pair S2 is deemed incorrect, and therefore the second sample pair S2 is not included in the automatically labeled data ALD.

In the boosting operation BT, the automatically labeled data ALD is added to existing labeled data ELD created up to the iteration in progress.

In a next iteration, all of these operations are performed again when necessary. For example, there could be new data collected, new heuristics developed to capture more matching conditions, a new model architecture developed, etc.

The outputs of the current embodiment are the automatically labeled data ALD and for each iteration, the trained machine learning model T-MLM for industrial equipment matching.

Fig. 4 shows a flowchart of a possible exemplary embodiment.

In a training operation TR, a first component trains a machine learning model with labeled data, thereby forming a trained machine learning model.

In a calculating operation CL, the trained machine learning model receiving as input at least pairs of equipment identifiers contained in unlabeled data, and calculates predictions, wherein the predictions contain at least one match prediction for a pair of equipment identifiers indicating that the equipment identifiers refer to a same industrial equipment, and wherein the predictions contain in particular at least one different prediction for a pair of equipment identifiers indicating that the equipment identifiers refer to different industrial equipment.

In a detecting operation DT, an inaccuracy detector uses an inaccuracy heuristics containing in particular probability thresholds for correct predictions, to detect accurate and inaccurate predictions among the predictions. The accurate predictions are collected as automatically labeled data.

In a final boosting operation BT, the automatically labeled data is added to existing labeled data. In a following iteration, the existing labeled data can be used as the labeled data for the training operation TR.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

Independent of the grammatical term usage, individuals with male, female or other gender identities are included within the term.

## Claims

1. A computer implemented method for automatically generating labeled training data for supervised machine learning models for industrial equipment matching, wherein the following operations are performed by components, and wherein the components are hardware components and/or software components executed by one or more processors:
- training (TR), by a first component, a machine learning model (MLM) with labeled data (LD), thereby forming a trained machine learning model (T-MLM),
- calculating (CL), by the trained machine learning model (T-MLM) receiving as input at least pairs of equipment identifiers contained in unlabeled data (UD), predictions (P), wherein the predictions (P) contain at least one match prediction (P-M) for a pair of equipment identifiers indicating that the equipment identifiers refer to a same industrial equipment, and wherein the predictions (P) contain in particular at least one different prediction (P-D) for a pair of equipment identifiers indicating that the equipment identifiers refer to different industrial equipment,
- detecting (DT), by an inaccuracy detector (ID) using an inaccuracy heuristics (IH) containing in particular probability thresholds for correct predictions, accurate and inaccurate predictions among the predictions (P), and collecting the accurate predictions as automatically labeled data (ALD).

2. The method according to claim 1, wherein
- the training operation (TR), the calculating operation (CL), and the detecting operation (DT) are performed in a first iteration and then in subsequent iterations, and
- the machine learning model (MLM) trained in each iteration is the same model or a different model, and wherein the machine learning model (MLM) trained in the subsequent iterations is a supervised model, in particular a neural network for entity matching that has been adapted for industrial equipment matching.

3. The method according to claim 2, wherein
- the machine learning model (MLM) trained in the first iteration is an unsupervised model, in particular an equipment identifier character frequency model or an autoencoder model.

4. The method according to claim 2 or 3, wherein
- the machine learning model (MLM) in the first iteration is a supervised model, in particular a few-shot entity matching supervised model that has been adapted for industrial equipment matching and that is trained with initial hand-picked labeled data.

5. The method according to any of the preceding claims 2, 3, and 4,
- with final operation of boosting (BT), at the end of each iteration, existing labeled data (ELD) by adding the automatically labeled data (ALD) to the existing labeled data (ELD), and
- wherein the existing labeled data (ELD) is used as the labeled data (LD) for the training operation (TR) in the next iteration.

6. A data labeling system for automatically generating labeled training data for supervised machine learning models for industrial equipment matching, comprising
- a first component, configured for training (TR) a machine learning model (MLM) with labeled data (LD), thereby forming a trained machine learning model (T-MLM), wherein the trained machine learning model (T-MLM) is configured for receiving as input at least pairs of equipment identifiers contained in unlabeled data (UD) and for calculating (CL) predictions (P), wherein the predictions (P) contain at least one match prediction (P-M) for a pair of equipment identifiers indicating that the equipment identifiers refer to a same industrial equipment, and wherein the predictions (P) contain in particular at least one different prediction (P-D) for a pair of equipment identifiers indicating that the equipment identifiers refer to different industrial equipment, and
- an inaccuracy detector (ID), configured for using an inaccuracy heuristics (IH) containing in particular probability thresholds for correct predictions and for detecting (DT) accurate and inaccurate predictions among the predictions (P), and collecting the accurate predictions as automatically labeled data (ALD).

7. A computer program product comprising instructions which, when the program is executed by a computer, cause the computer to carry out a method according to one of the method claims.

8. A provisioning device for the computer program product according to the preceding claim, wherein the provisioning device stores and/or provides the computer program product.
